# EUROPEAN PATENT APPLICATION

(11) **EP 1 906 168 A2**
(43) Date of publication of application: **02.04.2008**
(21) Application number: 07112466.3
(22) Date of filing: 13.07.2007
(51) Int. Cl.: G01N 15/02

(54) **A plant for controlling powder granulometry, and a method therefor**

(30) Priority: 27.09.2006 IT RE20060112
(71) Applicant: SACMI COOPERATIVA MECCANICI IMOLA SOCIETA' COOPERATIVA in breve SACMI IMOLA S.C., 40026 Imola BO (IT)
(72) Inventor: Zauli, Bruno, 40026, IMOLA (BOLOGNA) (IT); Foschi, Davide, 40026, IMOLA (BOLOGNA) (IT); Remondini, Marco, 40026, IMOLA (BOLOGNA) (IT); Ragazzini, Fabio, 40026, IMOLA (BOLOGNA) (IT)
(74) Representative: Corradini, Corrado

(57) **Abstract**

A plant for controlling powder granulometry, comprising a distribution plane (3) destined to receive a layer of powders and means (4) for detecting designed for acquiring at least an image of the layer of powders, a light source (8) being associated to the means for detecting, the light source being located, with respect to the distribution plane, opposite a position of the means for detecting, and being destined to direct a light beam towards the powders of the layer of powders.

## Description

The invention relates in general to a plant for controlling and determining a granulometric distribution of powder of any nature, in agreement with the preamble of claim 1.

The invention can be applied in various sectors, for example, in the ceramic industry where it is necessary to assess the granulometric distribution of ceramic powders obtained by spray-drying, or atomisation, also known as atomised powders, or also powders obtained by dry milling.

The prior art includes determining granulometric distribution of powders by using techniques such as sifting, laser diffraction, ultrasound acoustic spectroscopy and microscopy analysis. A technique which present excellent execution speed, a good level of accuracy and low costs is based on processing images acquired by video cameras or still-photo cameras or in any case using known optometric means; this technique is known as CAIA (Computer-Aided Image Analysis).

The prior art techniques enable an analysis of the granulometric distribution (in weight or volume) of the powders by comparison with a reference distribution, which varies according to production needs.

The present applicant has realised a plant for controlling powder granulometry, which is fully described in international patent application PCT/EP2004/010022, which is referred to for a full treatment of the invention.

This plant, in brief, comprises a vibrating distribution plane on which a layer of powders to be analysed is distributed. Above the vibrating plane means are positioned for obtaining images of the powder granules which make up the layer.

The means are connected to a processing unit which has the function of determining the granulometry of the powders under examination using a software program.

The means for detecting comprise a digital camera to which a light source is associated, which in the example is constituted by a circular neon lamp located about the camera lens, and therefore above the detecting plane.

The plant further comprises an aspirating device which removes the powders from the distribution plane after the means for detecting have acquired the images of the powder.

The plant operation, in brief, includes depositing a layer of powders taken from a sample to be analysed on the distribution plane, taking photographs of the powders, and aspirating the powders from the plane. These operations must be repeated several times in order to obtain a number of images which is sufficient to created a statistically significant sample of the real powder distribution. Once a sufficient number of images has been taken, the processing unit calculates the granulometric distribution of the powders under examination.

Though it efficiently carries out the functions it was made for, the plant described is not free of drawbacks.

The main drawback relates to the poor contrast between the powders to be analysed, the colour of which powders varies according to the nature and type thereof, and the distribution plane. The poor contrast is also accentuated by the positioning of the light source, above the distributing plane on which the layer of powders lies, the light rays of which light source reflect off the distribution plane in the direction of the lens.

This leads to a difficulty in the processing of the images taken, which can be interpreted only with difficulty by the image processing program.

A second drawback is due to the fact that, as mentioned, in order to have a representative statistical sample of the real granulometric distribution, it is necessary to use tens of images in succession of various layers of powders taken from a same sample to be analysed.

As after reading each image the layer has to be removed and another deposited, the image acquisition times are very slow.

All of the preceding makes the overall analysis times of the powder samples rather long.

The aim of the present invention is to obviate the drawbacks in the prior art in the ambit of a rational and reliable solution.

The invention attains the above aims thanks to the technical characteristics as recited in claim 1.

In particular, the invention obviates the above-mentioned drawbacks by making available a control plant for granulometric distribution of powders which comprises a distribution plane which receives a layer of powders, and means for detecting which acquire at least an image of the layer of powders, a lighting device being associated to the means for detecting, which lighting device directs a beam of light towards the powders of the layer; in the invention the lighting device is located, with respect to the distribution plane, in an opposite position to that in which means for detecting are located.

The positioning of the lighting device, on the opposite side with respect to the distribution plane, in which the means for detecting are positioned, together with the fact that the distribution plane is transparent to the light rays of the source, has the obvious advantage of increasing to a maximum the contrast between the distribution plane and the powders. In this way, in the images taken by the means for detecting, the powder grains are well contrasted with respect to the background and the edges thereof are much more detailed. This greatly improves granulometry analysis times, as well as making the resulting analysis more precise and reliable.

According to the invention, the lighting device comprises a source which generates a light beam. The light source is, in a preferred embodiment, preferably positioned below the transparent distribution plane and faces towards the plane itself such that the light beam is directed towards the plane in order to illuminate the powders. In a variation of the invention, the lighting device comprises, apart from light source generating a light beam, also at least a means for reflecting which directs the light beam towards the distribution plane such that the light crossing the distribution plane illuminates the layer of powders.

The light source can, for example, be constituted by a usual incandescent or gas lamp, or it can be a led panel.

The distribution plane used by the invention is preferably associated to means for activating which vibrate the plane in order to facilitate the distribution of the powder granules to be analysed in a single layer formed by a veil of granules which are laid side-by-side and which do not overlay one another.

Apart from enabling distribution of the powders, the vibration of the plane also has the function of being a means of transport of the grains, i.e. the vibration causes translation of the powder layer along the plane from a powder depositing zone to a powder discharging zone. In this way a continual descent of the powder material is set up, which slides at low speed and practically continuously, on the plane located before the means for detecting.

The continuous sliding of the powders before the means for detecting enables repeated images of the powders to be rapidly acquired, thus substantially reducing the acquisition times.

A variant of the invention includes, alternatively to the continuous vibration of the detection plane, an inclination of the plane which encourages natural sliding of the powders along the plane, from a depositing zone to a discharging zone.

According to the invention, the powders are deposited on the distribution plane by a distributor device comprising a hopper provided with an entry mouth for the powders and an unloading mouth of the powders onto the distribution plane. A batching valve is associated to and intercepts the powder discharge mouth, which batching valve comprises a rotating cylindrical body a surface of which exhibits at least a batching cell. In a preferred embodiment of the invention, the surface of the cylindrical body exhibits a plurality of reciprocally angularly-distanced batching cells.

The dependent claims delineate preferred and particularly advantageous embodiments of the plant for determining granulometry of the invention.

The invention also embraces the method of actuation of the plant, in agreement with independent no. 19 and dependent claims 20 and 21.

Further characteristics and advantages of the invention will emerge from a reading of the following description, provided by way of non-limiting example, with the aid of the figures illustrated in the accompanying figures of the drawings, in which:
- figure 1 is a perspective view of a device of the invention;
- figure 2 is a frontal view of the invention;

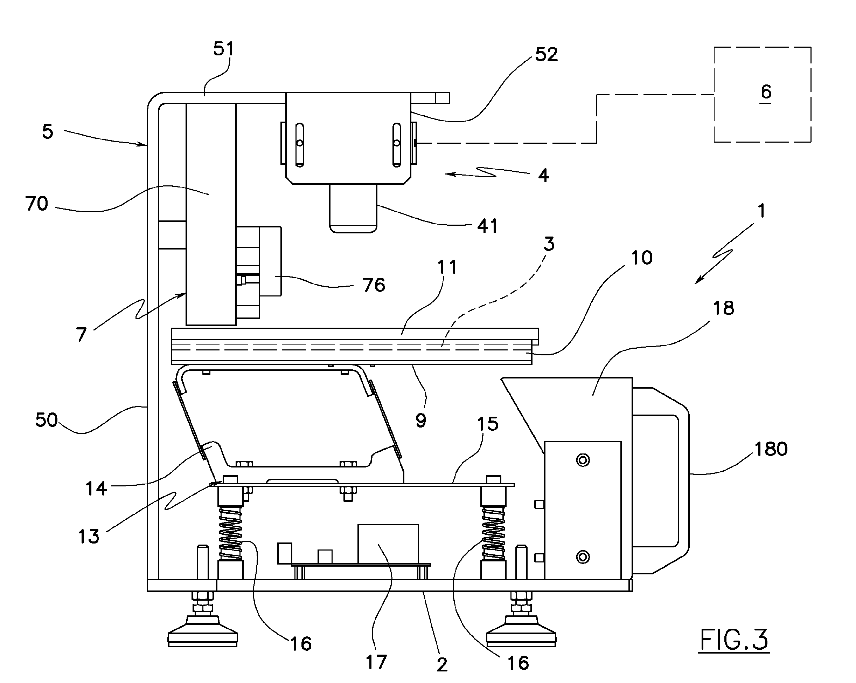

- figure 3 is a lateral view of the invention;
- figure 4 is a perspective view in section of a detail of the invention.

In the figures, 1 denotes the plant, which comprises a base 2 above which the following are positioned: a distribution plane 3, destined to receive a layer of powders, and means for acquiring 4 the images of the powders in the layer.

The means for acquiring 4 the images are supported above the distribution plane 3 by an L-shaped column 5, which comprises a vertical portion 50 which derives from an end of the base 2, and a horizontal portion 51 which projects above the distribution plane 3. A vertical flange 52 is fixed to the projecting portion 51, to which the means for detecting 4 are fixed.

In the illustrated embodiment the means for detecting 4 comprise a high-definition digital camera 40, the lens 41 of which is directed such as to frame at least a portion of the distribution plane 3; in particular, the physical axis of the lens 41 is substantially perpendicular to the distribution plane 3. The means for detecting 4 are connected to a processing unit 6 provided with a special program for determining the powder granulometry. Note that in other embodiments of the invention the processing unit 6 can be integrated with the plant 1.

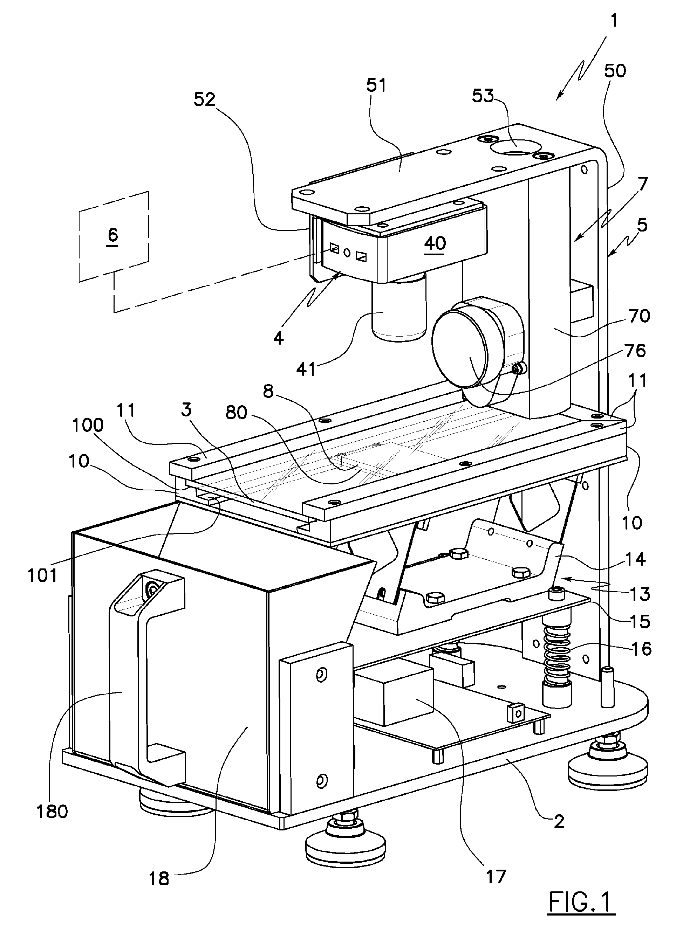

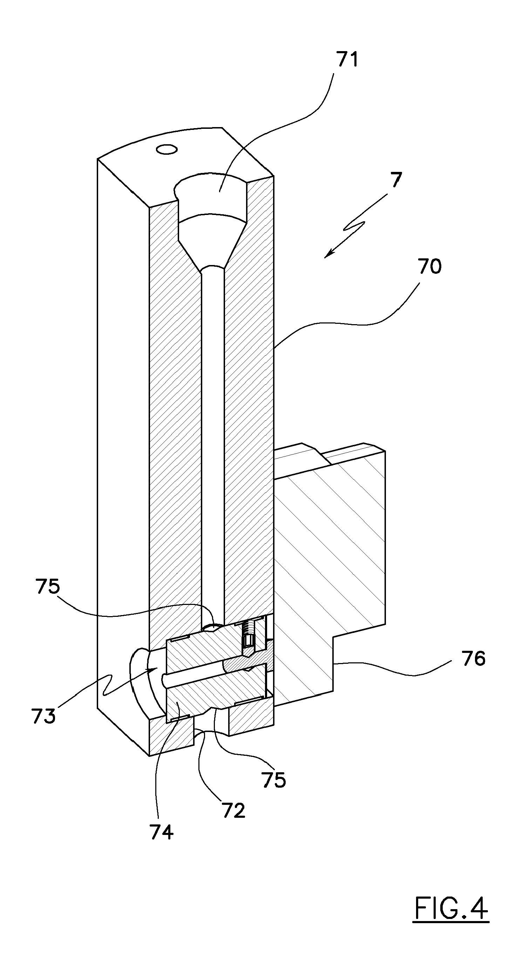

The column 5 also supports a distributor device 7 which has the function of depositing the powders to be analysed on the distribution plane 3. With special reference to figures 1 and 4, the device is placed at an end of the distribution plane 3 and comprises a hopper 70, the upper mouth 71 of which opens at a connected hole 53 of the horizontal portion 51 of the column 5 while the lower mouth 72 is associated to a batching valve 73. The batching valve 73 comprises a cylindrical body 74 which intercepts the discharge mouth of the hopper 70 and the surface of which exhibits a plurality of batching cells 75, reciprocally angularly distanced. The function of the cells 75 is to transfer batched quantities of powders from the hopper 70 to the distribution plane 3 without varying the arrangement thereof and without damaging the powders. As can be seen in figure 4, the body 74 of the batching valve 73 is centrally holed and is inserted onto the shaft of a gear reducer 76.

A lighting device is associated to the means for detecting 4 which in the illustrated embodiment comprises a light source 8 which generates a light beam illuminating the layer of powders laid onto the distribution plane 3 by the batched cells of the distributor device 7. The light source 8 is located at the camera 40 position, below the distribution plane 3, which distribution plane 3 is transparent to light such that the light rays emitted by the light beam 8 illuminate, from below the distribution plane 3, the powder granules forming the layer. In this way the outlines of the edges of the granules are particularly well-defined in the images acquired by the camera 40.

In the illustrated embodiment the light source 8 comprises a led lighting panel constituted by a plurality of LEDs, not illustrated in detail, arranged in a matrix on a rest plane 80.

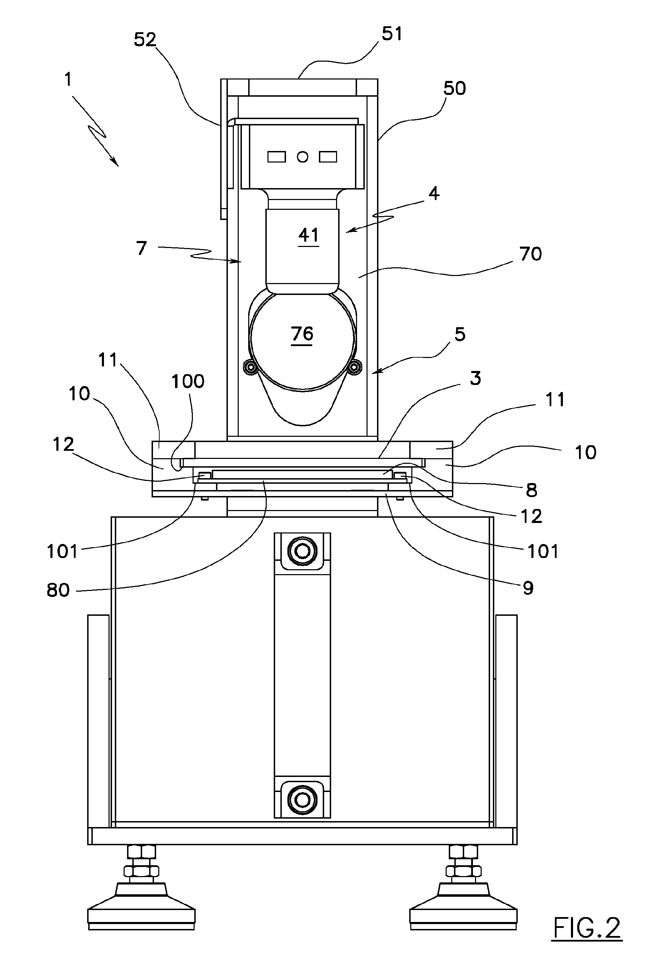

With special reference to figure 2, the distribution plane 3 is supported by an underlying plate 9 by means of three elements 10. In particular, each of the elements 10 exhibits two steps 100 and 101 to which the detection plane 3 and the light source 8 are respectively associated. Parallelepiped elements 11 are superiorly fixed to the elements 10, which parallelepiped elements 11, together with the elements 10, define a channel for receiving and blocking the distribution plane 3 which is thus made solid to the underlying plate 9.

The light source 8 is associated to the plane 80, two sides of which rest on the steps 101 of the elements 10 and are fixed to the steps 101 by means of usual bolts 12.

The plate 9, and therefore the distribution plane 3, rest on the base 2 by means of a structure 13 composed of a frame conformed as a parallelogram 14 which inferiorly exhibits a plate 15 supported on the base 2 by elastic means 16, which in the illustrated embodiment are constituted by four springs, each of which has an end constrained to an edge of the plate 15 and an end constrained to the base 2.

The detection plane 3 is set in vibration via the support structure 13 by means for activating 17 which in the illustrated embodiment comprise an electric vibrator with an electromagnet. In other embodiments of the invention the vibrator can be of a mechanical or pneumatic type.

The vibration of the detection plane 3 has the function of facilitating the spreading of the powder granules of the sample to be analysed such as to arrange them in a single layer formed by a veil of granules laid side-by-side and not overlying one another. The means for activating 17 keep the plane vibrating continuously, so that the vibrations can cause the translation of the layer of powders along the plane from the depositing zone thereof on the plane towards the opposite free end at which a collection container 18 of the samples of analysed powders is located. The collection container 18 is supported by the base 2 and is provided with a gripping handle 180.

In a further embodiment of the invention the distribution plane 3 is slightly inclined in order to favour a natural sliding of the powders from the depositing zone towards the collection container 18.

## Claims

1. A plant for controlling powder granulometry, comprising a distribution plane destined to receive a layer of powders and means for detecting for acquiring at least an image of the layer of powders, a lighting device being associated to the means for detecting, the lighting device being destined to direct a light beam towards the powders of the layer of powders, **characterised in that** the lighting device is located in an opposite position, with respect to the distribution plane, to a position of the means for detecting, the distribution plane being transparent.

2. The plant of claim 1, **characterised in that** the lighting device comprises a light source destined to generate a light beam.

3. The plant of claim 2, **characterised in that** the lighting device also comprises at least a means for reflecting for directing the light beam towards the layer of powders.

4. The plant of claim 3, **characterised in that** the means for reflecting comprises at least a mirror.

5. The plant of claim 2, **characterised in that** the light source is directed towards the layer of powders.

6. The plant of claim 2, **characterised in that** the light source comprises a LED panel.

7. The plant of claim 1, **characterised in that** the light source is a lamp.

8. The plant of claim 1, **characterised in that** the distribution plane is made of transparent glass.

9. The plant of claim 1, **characterised in that** the detection plane is associated to means for activating which vibrate the detection plane.

10. The plant of claim 9, **characterised in that** the means for activating comprise an electric vibrator with an electromagnet.

11. The plant of claim 9, **characterised in that** the means for activating comprise a pneumatic or a mechanical vibrator.

12. The plant of claim 1, **characterised in that** the distribution plane is inclined.

13. The plant of claim 1, **characterised in that** it comprises a distributor device for depositing the powders on the distribution plane.

14. The plant of claim 13, **characterised in that** the distributor device of the powders comprises a hopper provided with an inlet mouth for the powders and a discharge mouth for the powders, the discharge mouth, which is inferior, being intercepted by a batching valve.

15. The plant of claim 14, **characterised in that** the batching valve comprises a rotating cylindrical body a surface of which exhibits at least a batching cell which receives powders to be distributed on the distribution plane.

16. The plant of claim 15, **characterised in that** the rotating cylindrical body exhibits a plurality of batching cells which are reciprocally angularly equidistanced.

17. The plant of claim 15, **characterised in that** the rotating cylindrical body is set in rotation by a gear reducer.

18. The plant of claim 1, **characterised in that** it comprises a processing unit associated to the means for detecting.

19. A method for actuating the plant of claim 1, **characterised in that** it comprises following stages of operation:
- distributing a layer of powders on a distribution plane which is transparent to light;
- directing a light beam towards the layer of powders, which light beam passes across the distribution plane;
- acquiring images of the powders of the layer of powders;
- determining a granulometry of the powders by means of a processing unit.

20. The method of claim 19, **characterised in that** distribution of the powders on the distribution plane is performed continuously.

21. The method of claim 19, **characterised in that** the plane is set in vibration.
